(19) Europäisches Patentamt
European Patent Office
Office européen des brevets

(11) Numéro de publication: **0 230 199 B1**

# (12) FASCICULE DE BREVET EUROPEEN

(45) Date de publication du fascicule du brevet: **27.06.90**

(51) Int. Cl.[5]: **C07C 229/76**, C05D 9/02, C07C 51/41

(21) Numéro de dépôt: **86430050.4**

(22) Date de dépôt: **05.12.86**

(54) **Nouveaux sels ferriques complexes de l'acide alpha, alpha'-(1,2-éthanodihylodiimine)-bis[5-carboxy-2-hydroxybenzénoacétique], et leur procédé de préparation.**

(30) Priorité: **09.12.85 ES 549732**

(43) Date de publication de la demande: **29.07.87 Bulletin 87/31**

(45) Mention de la délivrance du brevet: **27.06.90 Bulletin 90/26**

(84) Etats contractants désignés: **AT BE CH DE GB GR IT LI LU NL SE**

(56) Documents cités:
**DE-A-2 436 190**
**DE-B-1 155 795**
**FR-A-1 161 196**
**GB-A-1 319 506**
**US-A-3 862 099**

(73) Titulaire: **ERCROS S.A., 56, Paseo de Gracia, ES-08007 Barcelona(ES)**

(72) Inventeur: **Tijero, Emilio, 56, Paseo de Gracia, E-08007 Barcelona(ES)**
Inventeur: **Gorrindo, Pedro José, 56, Paseo de Gracia, E-08007 Barcelona(ES)**
Inventeur: **Dominguez, Enrique, 158-180, calle Julio Galve y Brussons, E-08912 Badalona Barcelona(ES)**
Inventeur: **Martinez, José, 158-180, calle Julio Galve y Brussons, E-08912 Badalona Barcelona(ES)**

(74) Mandataire: **Marek, Pierre, 28 & 32 rue de la Loge, F-13002 Marseille(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 230 199 B1

## Description

La présente invention se rapporte à de nouveaux sels ferriques complexes de l'acide α,α'-(1,2-éthanodihylodiimine)-bis[5-carboxy-2-hydroxybenzénoacétique], produits qui présentent un intérêt pour le traitement de la chlorose ferrique de plantes de culture et ornementales dans les sols alcalins, et qui correspondent à la formule I suivante :

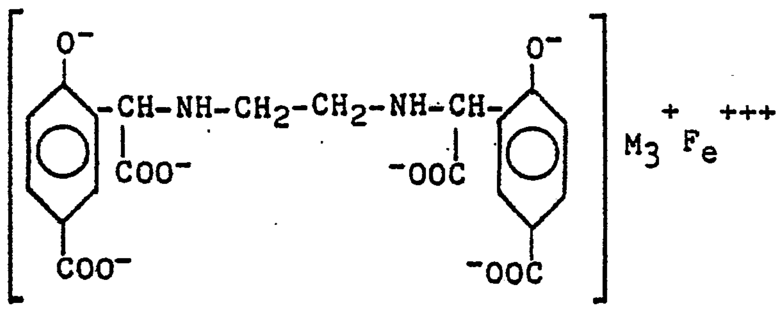

I

dans laquelle M peut être du potassium, du sodium ou de l'ammonium. Entrent également dans le cadre de l'invention, les hydrates correspondant aux sels anhydres considérés.

L'invention concerne également le procédé d'obtention de ces nouveaux produits.

Des sels ferriques complexes de l'acide α,α'-(1,2-éthanodihylodiimine)-bis[2-hydroxybenzénoacétique] et dérivés sont connus dans le bibliographie, principalement pour le traitement de la chlorose ferrique des végétaux.

Ainsi, on connaît le sel monosodique-ferrique de l'acide précité : numéro d'enregistrement du Chemical Abstracts (16455-61-1), brevet GB 832.989 de J.R. Geigy A.G. et brevet US 4.130.582 de Ciba Geigy Cor; on connaît aussi les sels alcalino-ferriques du monoamide du même acide : brevets ES 258.652 et 350.663, tous deux de S.A. Cros, et brevet FR 1.293.266, également de S.A. Cros.

On trouve également dans la bibliographie des descriptions du sel monosodique-ferrique de l'acide α,α'-(1,2-éthanodihylodiimine)-bis[2-hydroxy-5-méthylbenzénoacétique], numéro d'enregistrement du Chemical Abstracts (34541-04-3), et du sel acide de celui-ci, numéro de référence (58090-70-3): W.C. Cooper J. Rio Grande Valley Hort. Soc. 11, 11-13 (1957) ; R.H. Hilgeman idem 11, 14-20 (1957); Wm. W. Armstrong idem 11, 21-27 (1957); R. Ewell Hort Science (1975), 10 (5), 519-21 et R. Ewell J. Am. Soc. Hortic. Sci. (1978), 103 (5), 608-12.

Dans le brevet US 3.862.099 de W.R. Grace and Co., on cite, pour la fabrication d'adhésifs, les sels de fer complexes suivants :

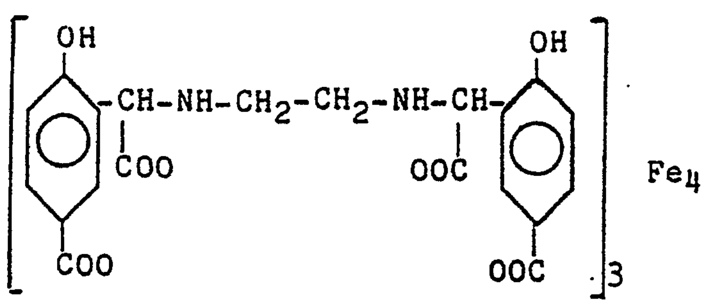

numéro d'enregistrement du Chemical Abstracts (55462-63-0)

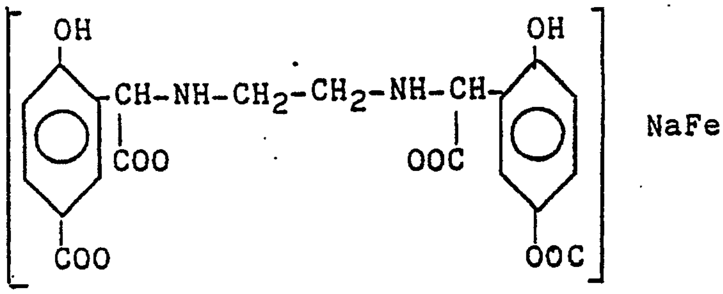

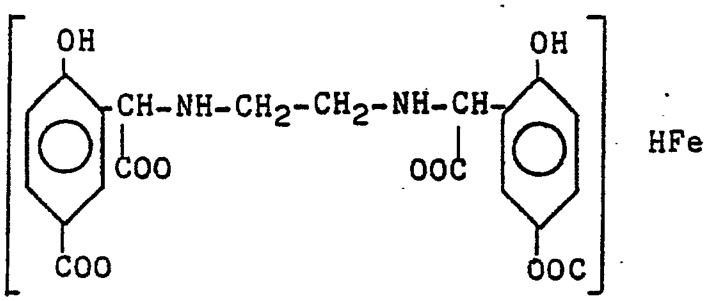

Deux des problèmes principaux que posent ces sels complexes de fer quand on les utilise dans le traitement de la chlorose ferrique sont leur faible solubilité dans l'eau et l'instabilité des solutions obtenues, ce qui rend difficile ou même impossible leur emploi et leur stockage en solution, même en recourant dans certains cas à l'emploi de stabilisants tels que l'hydroxybenzophénone, selon le brevet ES 385.970 de J.R. Geigy A.G. pour parvenir à améliorer la stabilité de ces solutions.

Un des objectifs de la présente invention a été de surmonter ces problèmes, en préparant un certain nombre de nouveaux sels ferriques complexes qui donnent une réponse optimale correctrice de la chlorose ferrique et ne présentent pas les inconvénients précités : faible solubilité dans l'eau et instabilité de leurs solutions.

Une des caractéristiques des nouveaux sels complexes de fer (III) selon la présente invention, est qu'ils sont stables en milieu alcalin, au-dessous de pH = 10 et étonnamment solubles dans l'eau, ce qui les rend particulièrement intéressants pour le traitement de la chlorose ferrique, du fait, entre autres raisons, qu'on peut doser leur application dans les cultures de multiples manières, par exemple sous forme solide (poudre, granulés, etc...), en solution aqueuse diluée ou en solution concentrée jusqu'à l'ordre de 20 à 30 % exprimé en g de sel complexe/100 ml de solution. Cela signifie que ces sels complexes sont particulièrement avantageux par rapport à d'autres composés connus, de stabilité analogue mais de solubilité trés inférieure dans l'eau, de sorte que, pour être efficaces dans le traitement de la chlorose, ils doivent être dosés sur le terrain d'une manière malcommode, comme l'application par injection dans le sol ou l'emploi de grandes quantités d'eau d'arrosage qui ne sont pas toujours disponibles dans toutes les cultures.

Une autre caractéristique des nouveaux sels complexes de fer (III) est leur mobilité élevée en terrain alcalin, ce qui permet une bonne rapidité de réponse pour la correction de la chlorose ferrique des plantes et végétaux en général, dès leur application. Cette caractéristique est également due à la solubilité

de ces sels dans l'eau, ce qui permet une bonne mobilité à travers le terrain utilisé comme véhicule et l'eau d'irrigation. De plus, on peut réduire au minimum la quantité d'eau à utiliser, ce qui les rend particulièrement intéressants dans les cultures à racines dans des zones où l'eau est rare.

Une autre caractéristique des nouveaux sels complexes de fer (III) réside dans le fait qu'ils donnent lieu à des solutions aqueuses concentrées stables. Ainsi, une solution de 200 g/l de sel trisodicoferrique de l'acide α,α'-(1,2-éthanodihylodiimine)-bis[5-carboxy-2-hydroxybenzénoacétique] est restée stable dans des essais de vieillissement accéléré, consistant à la soumettre pendant 6 semaines à des températures de 5 degrés C et 50 degrés C, par jours alternés.

Est aussi caractéristique du procédé d'obtention des nouveaux sels complexes de fer (III) selon la présente invention, le fait de partir d'un sel inorganique de fer (II), comme le $SO_4Fe$, au lieu d'un sel de fer (III), donnant initialement un sel complexe de fer (II) lequel, en présence d'oxygène, s'oxyde immédiatement pour donner du sel complexe de fer (III). De cette manière, on évite la formation d'hydroxyde de fer (III) qui pourrait contaminer le produit, ce qui ne serait pas souhaitable pour une application de ce dernier en solution aqueuse.

Le procédé, objet de la présente invention, peut être schématisé par la réaction suivante :

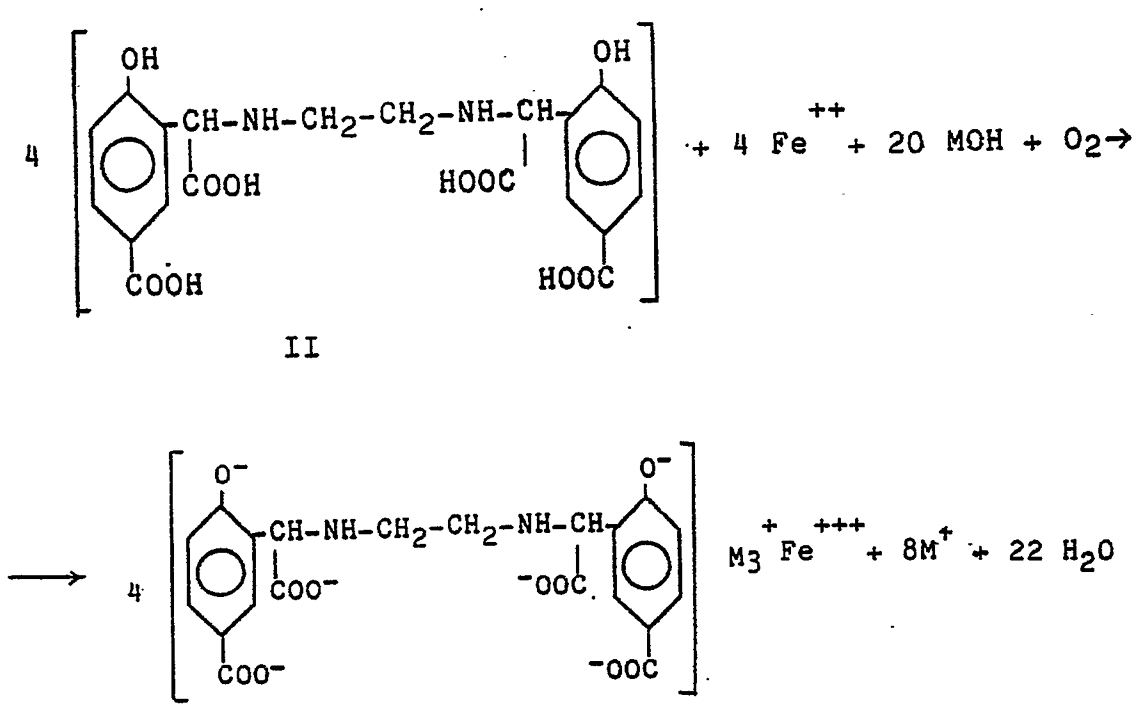


II

I

où M peut être du potassium, du sodium ou de l'ammonium. C'est-à-dire que le procédé est caractérisé par le fait qu'on fait réagir en milieu aqueux l'acide α,α'-(1,2-éthanodihylodiimine)-bis[5-carboxy-2-hydroxybenzénoacétique] de formule II, avec un sel de $Fe^{++}$ neutre ou basique tel que $SO_4Fe$, et avec un hydroxyde alcalin tel que NaOH, KOH ou $NH_4OH$, et l'air, à une température comprise entre 0 degré C et 50 degrés C en donnant d'une manière pratiquement instantanée le sel complet de fer (III) de formule I où M peut être du potassium, du sodium ou de l'ammonium.

Pour faciliter la compréhension des explications précédentes, on décrit ci-après quelques exemples de préparation de sels ferriques complexes selon la présente invention, ces exemples étant nullement limitatifs.

Exemple 1 - Obtention du sel trisodico-ferrique de l'acide α,α'-(1,2-éthanodihylodiimine)-bis[5-carboxy-2-hydroxybenzénoacétique].

Dans un vase de 1000 ml, muni d'un dispositif d'agitation mécanique et d'un pH-mètre, on met 500 millilitres d'eau et 160,7 g (0,358 mol) de l'acide-α,α'-(1,2-éthanodihylodiimine)-bis[5-carboxy-2-hydroxybenzénoacétique]. On ajoute, en agitant, une solution de NaOH à 50 % jusqu'à pH = 7 et on ajoute ensuite, en une demi-heure, 54,3 g (0,358 mol) de $SO_4Fe$, en maintenant l'agitation et le pH à 7 avec l'addition d'un supplément de solution de NaOH à 50 %, en consommant au total 143,2 g (1,79 mol). Après la fin de l'addition des produits, on agite pendant encore 1h30, avec barbotage d'air. Finalement, on fait passer le

contenu du vase dans un ballon gradué de 1 litre en complétant le volume avec de l'eau, jusqu'à affleurement. On obtient ainsi 1 litre de solution contenant 2O3,O g de sel trisodico-ferrique de l'acide-α,α'-(1,2-éthanodihylodiimine)-bis[5-carboxy-2-hydroxybenzénoacétique] d'une teneur en fer chélaté de 2O g/l. Densité de la solution : 1,144 g/ml. Maximum d'absorption colorimétrique = 486 nm.

Le produit peut être facilement isolé par évaporation jusqu'à siccité. On obtient ainsi le sel complexe uni à du sulfate sodique, qui peut être purifié, si on le souhaite, en extrayant le sel complexe avec de l'éthanol ou du méthanol aqueux et en évaporant finalement le solvant.

Analyse élémentaire pour le $C_{20}H_{14}N_2O_{10}FeNa_3$

| | Trouvé | Calculé |
|---|---|---|
| C | 42,01% | 42,35% |
| H | 2,55% | 2,49% |
| N | 5,10% | 4,94% |
| Fe | 9,95% | 9,85% |
| Na | 11,98% | 12,16% |

Exemple 2 - Obtention du sel tripotassico-ferrique de l'acide α,α'-(1,2-éthanodihylodiimine)-bis [5-carboxy-2-hydroxybenzénoacétique].

En procédant de manière analogue à l'exemple 1, mais en ajoutant 2OO g (1,79 mol) de KOH à 5O % au lieu de NaOH, on obtient 1 litre de solution contenant 22O,2 g de sel tripotassico-ferrique de l'acide α,α'-(1,2-éthanodihylodiimine)-bis[5-carboxy-2-hydroxybenzénoacétique], avec une teneur en fer chélaté de 2O g/l. Densité de la solution = 1,157 g/ml. Maximum d'absorption colorimétrique = 486 nm.

Exemple 3 - Obtention du sel triamonico-ferrique de l'acide α,α'-(1,2-éthanodihylodiimine)-bis[5-carboxy-2-hydroxybenzénoacétique]

En procédant de manière analogue à l'exemple 1, mais en ajoutant 152,15 g (1,79 mol) de $NH_3$ à 2O % au lieu de NaOH, on obtient 1 litre de solution contenant 197,7 g de sel triamonico-ferrique de l'acide α,α'-(1,2-éthanodihylodiimine)-bis[5-carboxy-2-hydroxybenzénoacétique], avec une teneur en fer chélaté de 2O g/l. Densité de la solution = 1,1O4 g/ml. Maximum d'absorption colorimétrique = 486 nm.

Comme cela est possible avec la plupart des correcteurs de chlorose ferrique destinés au traitement des plantes, les nouveaux composés selon la présente invention peuvent être parfaitement employés seuls, sous forme solide ou simplement dissous dans de l'eau, pour les actions de traitement de plantes. Mais, de plus, ces nouveaux composés peuvent être très facilement combinés avec d'autres substances nutritives, en permettant par conséquent de nombreuses formes de présentation que l'on choisira en fonction de leur convenance à chaque cas d'application spécifique. On expose ci-après un exemple concret de forme de présentation.

Exemple 4 - Préparation d'une solution nutritive pour le traitement des plantes.

On prépare une solution nutritive contenant du fer, du magnésium, du bore, du manganèse, du zinc et du cuivre en dissolvant dans de l'eau, jusqu'à obtention de 1 litre de solution, 2O3 grammes de sel trisodico-ferrique de l'acide α,α'-(1,2-éthanodihylodiimine)-bis[5-carboxy-2-hydroxybenzénoacétique], 11O grammes de sulfate de magnésium, $MgSO_4.7H_2O$, 9 grammes de tétraborate sodique, $Na_2B_4O_7.1OH_2O$, 3 grammes de sulfate de manganèse $MnSO_4.H_2O$, 2 grammes de sulfate de zinc, $ZnSO_4.7H_2O$ et O,8 gramme de sulfate de cuivre $CuSO_4.5H_2O$.

On a obtenu ainsi une solution de la composition suivante en % (p/v)

| | |
|---|---|
| Fe | 2,0% |
| Mg | 1,0% |
| B | 0,1% |
| Mn | 0,1% |
| Zn | 0,05% |
| Cu | 0,02% |

Finalement, l'efficacité des sels ferriques complexes selon la présente invention apparaît avec les exemples d'utilisation présentés ci-après.

Exemple 5 - Traitement de plantes chlorotiques de cacahuète.

On a traité des plantes chlorotiques de cacahuète avec une solution aqueuse du sel trisodico-ferrique de l'acide α,α'-(1,2-éthanodihylodiimine)-bis[5-carboxy-2-hydroxybenzénoacétique] à une dose de 1,O mg de fer chélaté par pied. La guérison complète des plantes a été obtenue en quatre semaines.

Exemple 6 - Traitement de caprons.

On a également effectué un traitement avec une solution aqueuse du sel trisodico-ferrique de l'acide, α,α'-(1,2-éthanodihylodiimine)-bis[5-carboxy-2-hydroxybenzénoacétique] sur des caprons de la variété "Tioga" qui présentaient des symptômes évidents de chlorose ferrique. Une dose de O,24 grammes de $Fe/m^2$ s'est révélée efficace.

Exemple 7 - Traitement des pins.

La même dose et le même produit décrits dans l'exemple 6 précédent ont été appliqués avec des résultats positifs sur des pins de l'espèce Pinus pinastes âgés de trois ans.

**Revendications**

1. - Procédé pour l'obtention de sels ferriques complexes de l'acide α,α'-(1,2-éthanodihylodiimine)-bis[5-carboxy-2-hydroxybenzénoacétique], de la formule générale I suivante :

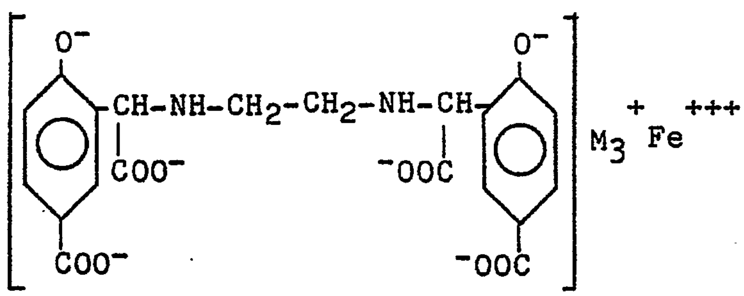

I

où M peut-être du potassium, du sodium ou de l'ammonium, de même que les hydrates correspondant aux sels anhydres considérés, caractérisé par le fait qu'on fait réagir, en milieu aqueux, l'acide α,α'-(1,2-éthanodihylodiimine)-bis [5-carboxy-2-hydroxybenzénoacétique] de formule II suivante :

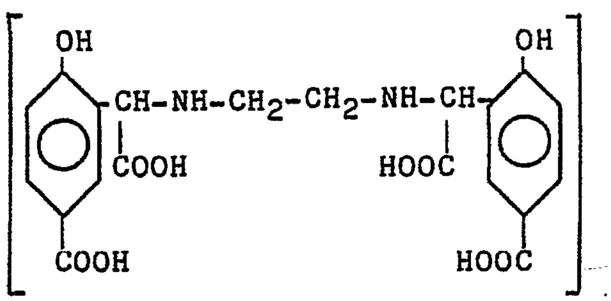

II

avec un sel de fer (II) neutre ou basique tel que $SO_4Fe$, un hydroxyde alcalin tel que NaOH, KOH ou $NH_4OH$, et l'air, en ajoutant le sel de fer (II) et l'hydroxyde alcalin simultanément à une vitesse telle que le pH se maintienne, au long de la réaction, entre 6,7 et 7,3, avec la possibilité, si on le souhaite, d'isoler le produit sous forme solide, en évaporant jusqu'à siccité et en purifiant au besoin, de manière conventionnelle, par exemple par extraction avec un agent hydroalcoolique.

2. - Procédé suivant la revendication 1, caractérisé par le fait que la réaction se fait à des températures comprises entre O degré et 5O degrés C, de préférence entre 15 degrés C et 25 degrés C.

3. - Sels ferriques complexes de l'acide α,α'-(1,2-éthanodihylodiimine)-bis[5-carboxy-2-hydroxybenzénoacétique] caractérisé par la formule I suivante :

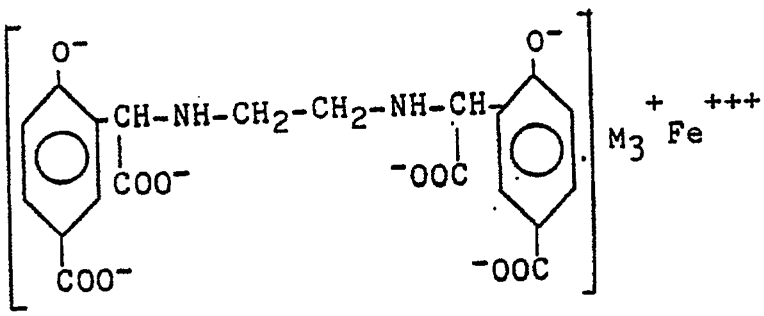

I

dans laquelle M peut être du potassium, du sodium ou de l'ammonium.

4. - Sels ferriques complexes de l'acide α,α'-(1,2-éthanodihylodiimine)-bis[5-carboxy-2-hydroxybenzénoacétique] selon la revendication 3, caractérisés par leur présentation sous forme d'hydrates.

**Claims**

1. Process for obtaining complex iron salts of the acid α,α'-(1,2-ethanodihylodiimine)-bis[5-carboxy-2-hydroxybenzenoacetic], of the following general formula I:

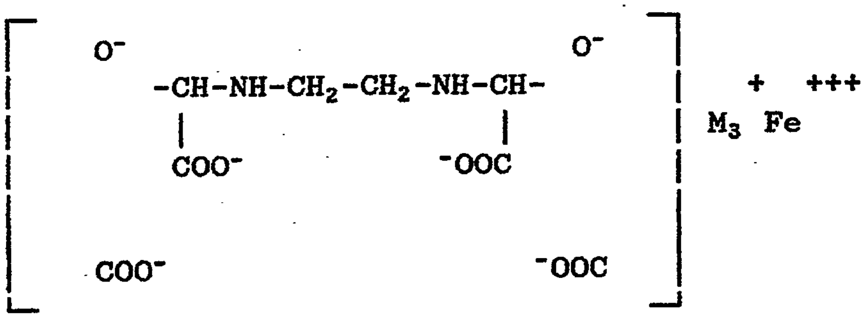

I

where M can be potassium, sodium or ammonium, and also the hydrates corresponding to the anhydrous salts in question, characterized by the fact that the acid α,α'-(1,2-ethanodihylodiimine)-bis[5-carboxy-2-hydroxybenzenoacetic] of the following formula II:

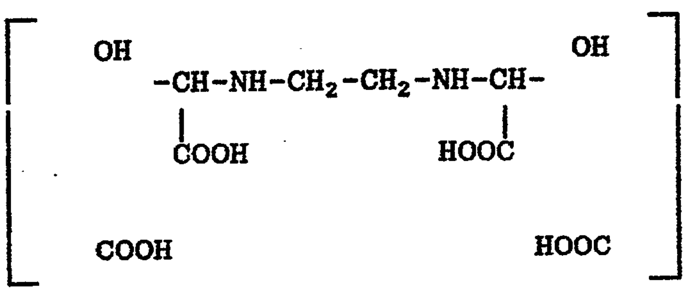

II

is made to react in an aqueous environment with a neutral or basic iron salt (II) such as $SO_4Fe$, an alkaline hydroxide such as NaOH, KOH or $NH_4OH$, and air, adding the iron salt (II) and the alkaline hydroxide simultaneously at a speed such that the pH is maintained at between 6.7 and 7.3 throughout the reaction, with the possibility, if desired, of isolating the product in a solid form by evaporating to dryness and purifying if necessary, in an conventional manner, such as by extraction with a hydroalcoholic agent.

2. Process according to claim I, characterized by the fact that the reaction is carried out at temperatures between 0 degrees and 50 degrees Celsius, preferably between 15 degrees and 25 degrees Celsius.

3. Complex iron salts of the acid α,α'-(1,2-ethanodihylodiimine)-bis[5-carboxy-2-hydroxybenzenoacetic] characterized by the following formula I:

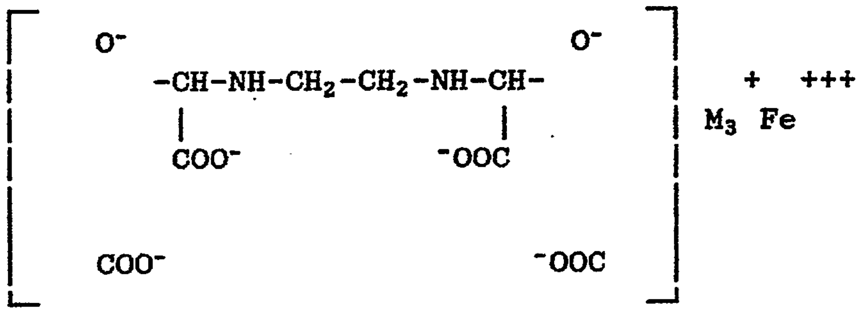

I

where M can be potassium, sodium or ammonium.

4. Complex iron salts of the acid α,α'-(1,2-ethanodihylodiimine)-bis[5-carboxy-2-hydroxybenzenoacetic] according to claim 3, characterized by their presentation in the form of hydrates.

**Patentansprüche**

1. Verfahren zur Herstellung von Eisen-III-Komplexsalzen der α,α'-(1,2-Ethandiyldiimino)-bis[5-carboxy-2-hydroxybenzolessigsäure] der nachfolgenden allgemeinen Formel I:

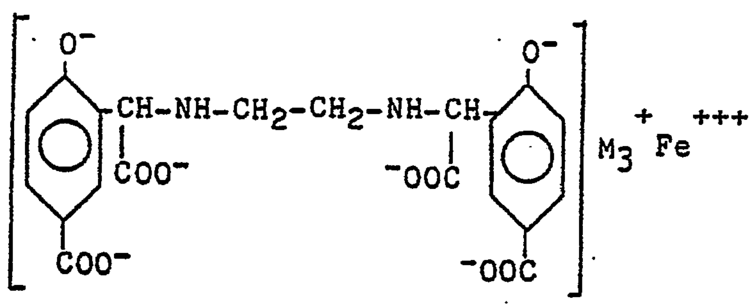

I

wobei M Kalium, Natrium oder Ammonium sein kann, sowie der den jeweiligen Anhydrat-Salzen entsprechenden Hydrate, dadurch gekennzeichnet, daß man in wäßrigem Milieu α,α'-(1,2-Ethandiyldiimino)-bis[5-carboxy-2-hydroxybenzolessigsäure] der nachfolgenden Formel II:

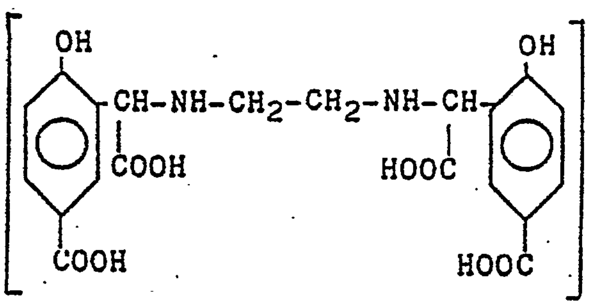

II

mit einem neutralen oder basischen Eisen-II-Salz umsetzt wie $FeSO_4$, mit einem alkalischen Hydroxid wie NaOH, KOH oder $NH_4OH$, Luft umsetzt, wobei man das Eisen-II-Salz und das Alkalihydroxid gleichzeitig so schnell zugibt, daß der pH-Wert während der Reaktion zwischen 6,7 und 7,3 gehalten wird, wobei ggf. das Produkt in fester Form isolierbar ist, indem es bis zur Trockene abgedampft wird und, falls notwendig, in konventioneller Weise gereinigt wird, beispielsweise durch Extraktion mit einem Wasser/Alkohol Agens.

2. Verfahren nach Anspruch 1, dadurch gekennzeichnet, daß die Reaktion bei Temperaturen zwischen 0 und 50°C, bevorzugt zwischen 15 und 25°C durchgeführt wird.

3. Eisen-III-Komplexsalze der α,α'-(1,2-Ethandiyldiimino)-bis[5-carboxy-2-hydroxybenzolessigsäure], gekennzeichnet durch die nachfolgende Formel I:

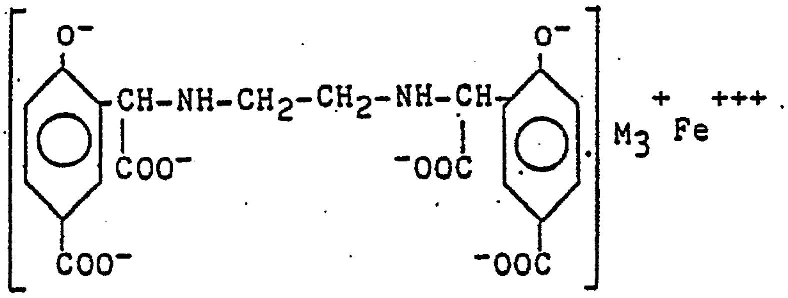

I

wobei M Kalium, Natrium oder Ammonium sein kann.

4. Eisen-III-Komplexsalze der α,α'-(1,2-Ethandiyldiimino-bis[5-carboxy-2-hydroxybenzolessigsäure] nach Anspruch 3, dadurch gekennzeichnet, daß sie in Form von Hydraten vorliegen.